# EUROPÄISCHE PATENTSCHRIFT

(11) **EP 2 212 814 B1**
(45) Veröffentlichungstag und Bekanntmachung des Hinweises auf die Patenterteilung: **14.03.2018**
(21) Anmeldenummer: 08799959.5
(22) Anmeldetag: 14.10.2008
(51) Int. Cl.: G06F 17/50, G01N 3/00

(54) **VERFAHREN ZUR ERSTELLUNG EINER BESCHREIBUNG VON KOMPLEXEN MATERIALIEN MITTELS NEURONALER NETZE ODER VERWANDTER TECHNIKEN**
METHOD FOR MAKING A DESCRIPTION OF COMPLEX MATERIALS BY MEANS OF NEURAL NETWORKS OR RELATED TECHNIQUES
PROCÉDÉ D'ÉTABLISSEMENT D'UNE DESCRIPTION DE MATÉRIAUX COMPLEXES AU MOYEN DE RÉSEAUX NEURONAUX OU DE TECHNIQUES APPARENTÉES

(30) Priorität: 19.10.2007 AT 16892007
(43) Veröffentlichungstag der Anmeldung: 04.08.2010
(73) Patentinhaber: Andata Entwicklungstechnologie GmbH & Co. KG, 5400 Hallein (AT)
(72) Erfinder: KUHN, Andreas, A-5440 Kuchl-Golling (AT); SCHLAGER, Gerolf, A-5020 Salzburg (AT); BÖHM, Helmut, A-4020 Linz (AT)
(74) Vertreter: Gibler & Poth Patentanwälte KG
(86) Internationale Anmeldenummer: PCT/AT2008/000375
(87) Internationale Veröffentlichungsnummer: WO 2009/049343

(56) Entgegenhaltungen:
- JUNG ET AL: "Neural network constitutive model for rate-dependent materials" COMPUTERS AND STRUCTURES, PERGAMON PRESS, GB, Bd. 84, Nr. 15-16, 1. Juni 2006 (2006-06-01), Seiten 955-963, XP005428644 ISSN: 0045-7949
- AQUINO ET AL: "Self-learning finite elements for inverse estimation of thermal constitutive models" INTERNATIONAL JOURNAL OF HEAT AND MASS TRANSFER, PERGAMON PRESS, GB, Bd. 49, Nr. 15-16, 1. Juli 2006 (2006-07-01), Seiten 2466-2478, XP005445787 ISSN: 0017-9310
- HASHASH Y M A ET AL: "Numerical implementation of a neural network based material model in finite element analysis" INTERNATIONAL JOURNAL FOR NUMERICAL METHODS IN ENGINEERING WILEY UK, Bd. 59, Nr. 7, 21. Februar 2004 (2004-02-21), Seiten 989-1005, XP002510214 ISSN: 0029-5981

## Beschreibung

Die Erfindung betrifft ein Verfahren gemäß dem Oberbegriff des Patentanspruches 1. Jung et al: "Neural network constitutive model for rate-dependent materials", Computers and Structures, 84, (2006), 955-963, zeigt, dass neuronale Netze dazu verwendet werden können, den Zusammenhang zwischen Belastung und Spannung in einem Material dergestalt darzustellen, dass das sich ergebende Modell als konstitutives Modell zur Beschreibung des Materialverhaltens verwendbar ist.

Es ist weiter bekannt bei der numerischen Simulation mechanischer Körper die Körper in Einzelelementen aufzubauen, wobei die Einzelelemente unterschiedlich sein können. Die Genauigkeit des Ergebnisses dieser numerischen Simulationen hängt wesentlich von der Qualität der Beschreibung des Materialverhaltens für die Einzelelemente ab. Insbesondere für komplexe Materialien wie sie beispielsweise im Leichtbau verwendet werden, ist eine Beschreibung mit hoher Genauigkeit bis in den Versagensbereich oftmals nicht verfügbar. Aufgabe der Erfindung ist es daher ein Verfahren der eingangs genannten Art anzugeben, mit welchem die genannten Nachteile vermieden werden können, mit welchem auch für komplexe Materialien genaue Simulationsergebnisse mit einer hohen Zuverlässigkeit über das Verhalten des mechanischen Körpers ermittelt werden können.
Erfindungsgemäß wird dies durch die Merkmale des Patentanspruches 1 erreicht. Dadurch ergibt sich der Vorteil, dass das komplexe Material in einen Versuchskörper implementiert werden kann, wobei die globalen Beanspruchungen und globalen Verformungen des Versuchskörpers einfach und genau mit herkömmlichen Messmethoden ermittelt werden können und das Verhalten des komplexen Materials aus diesen globalen Beanspruchungen und globalen Verformungen des Versuchskörpers bestimmt werden. Dabei braucht bei der Bestimmung der globalen Beanspruchungen und globalen Verformungen nicht berücksichtigt zu werden, wie der Versuchskörper im Inneren aufgebaut ist, da lediglich äußere Größen berücksichtigt werden können. Beispielsweise können die in den Aufhängungen des Versuchskörpers wirkenden Kräfte und die Verschiebungen dieser Aufhängungen als globale Beanspruchungen und globale Verformungen ermittelt werden. Durch die Verwendung von beispielbasierten Modellen ist es nicht erforderlich, für das Materialverhalten analytische Ansätze vorzugeben, weshalb das Verfahren im Wesentlichen für beliebige Materialien durchgeführt werden kann. Werden die globalen Beanspruchungen und globalen Verformungen des Versuchskörpers über einen Zeitraum zu vorgebbaren Zeitpunkten bestimmt, so können diese Messergebnisse zum Trainieren des beispielbasierten Modells verwendet werden.

Die Erfindung betrifft weiters einen Datenträger, auf dem ein Programm zur Ausführung des oben beschriebenen Verfahrens gespeichert ist.

Die Unteransprüche, welche ebenso wie der Patentanspruch 1 gleichzeitig einen Teil der Beschreibung bilden, betreffen weitere vorteilhafte Ausgestaltungen der Erfindung.
Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine schematische Darstellung einer bevorzugten Ausführungsform des erfindungsgemäßen Verfahrens; und
Fig. 2 eine Ausführungsform eines Versuchskörpers.

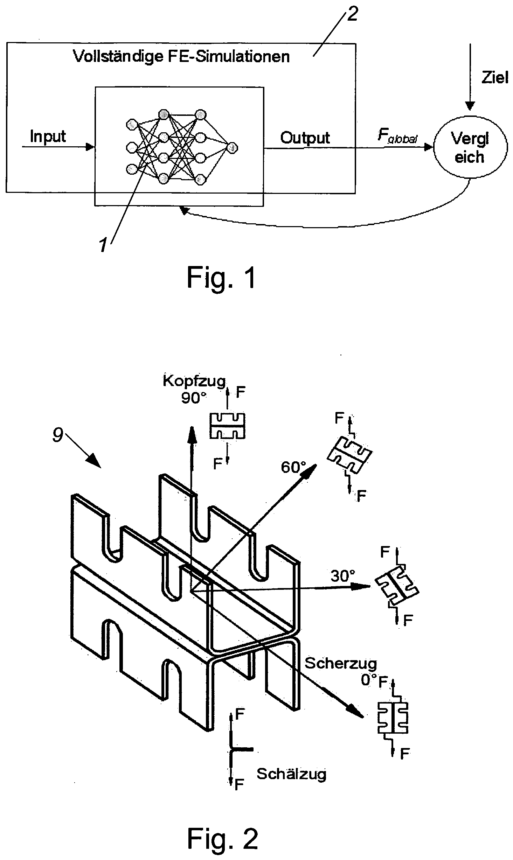

Die Fig. 1 zeigt schematisch ein Verfahren zur Erstellung einer Beschreibung von komplexen Materialien zum Einsatz in numerischen Simulationen mechanischer Körper, wobei ein beispielbasiertes Modell 1 für die Beschreibung verwendet wird.
Beispielbasierte Modelle 1 sind Modelle, welche anhand von Beispielen trainierbar sind, um einer oder mehrerer Eingangsgrößen eine oder mehrerer Ausgangsgrößen zuzuordnen. Bekannte derartige beispielbasierte Modelle 1 sind neuronale Netzwerke, adaptive Systeme od. dgl. Vorteilhaft dabei ist, dass das beispielbasierte Modell 1 ohne analytischen Ansatz für den Zusammenhang der Eingangsgrößen und Ausgangsgrößen auskommt, wobei lediglich sicherzustellen ist, dass das beispielbasierte Modell 1 in der Lage ist, die erforderliche Komplexität darzustellen und die Beispiele geeignet gewählt sind, um ein hinreichendes Training des beispielbasierten Modells 1 sicherzustellen. Derartige beispielbasierte Modelle 1 und das Training anhand von Beispielen sind bekannt.
Numerische Simulationen mechanischer Körper sind ebenfalls bekannt, wobei durch die Simulation das Verhalten eines mechanischen Körpers nachgebildet wird. Dabei kann beispielsweise durch die Simulation das Herstellen von Versuchskörpern und das Testen dieser Versuchskörper vermieden werden. Weiters kann bei der Ermittlung der Ursachen eines Schadens durch eine Simulation vieler verschiedene Szenarien untersucht werden, was durch Messungen an einzelnen Versuchskörpern, welche bei den Messungen gegebenenfalls zerstört werden, aus Zeit- und Kostengründen nicht möglich wäre. Weiters kann durch eine numerische Simulation das Verhalten eines mechanischen Körpers, beispielsweise eines Tragwerkes, bei Lasten ermittelt werden, welche in einem Versuch nur schwierig oder gar nicht aufgebracht werden können. In der Kraftfahrzeugindustrie wird beispielsweise mittels numerischer Simulationen das Verhalten des Kraftfahrzeuges bei einem Aufprall bestimmt, wodurch die Zerstörung von Fahrzeugen vermieden werden kann und eine verbesserte Analyse des Verhaltens aufgrund einer genaueren Vorgabe der Ausgangsbedingungen gegeben ist.
Insbesondere für numerische Simulationen, bei denen die Belastbarkeitsgrenze eines mechanischen Körpers ermittelt werden soll, ist es wichtig, dass das Verhalten der einzelnen Komponenten des mechanischen Körpers auch in der Nähe der Versagensgrenze möglichst genau durch die Beschreibung der jeweiligen Materialien wiedergegeben wird. Beispielsweise kann eine verringerte Tragfähigkeit einer Schweißstelle nach Beginn eines Versagenseintritts, aber vor dem völligen Versagen dieser Schweißstelle einen erheblichen Einfluss auf das Gesamtverhalten des mechanischen Körpers haben. Eine Aufgabe gegenständlicher Erfindung ist es, das Verhalten eines komplexen Materials, wie es beispielsweise eine Schweißstelle darstellt, möglichst genau wiederzugeben und für eine numerische Simulation bereitzustellen. Das komplexe Material wird in einem Versuchskörper 9 integriert und anschließend an dem Versuchskörper Vorgabewerte für die globale Beanspruchung und die globale Verschiebung ermittelt.
Weiters wird ein numerisches Modell 2 des Versuchskörpers 9 unter Einbeziehung des beispielbasierten Modells 1 für das komplexe Material erstellt und das beispielbasierte Modell 1 anhand der Ergebnisse von numerischen Simulationen des Versuchskörpers 9 zur Ermittlung des Zusammenhangs zwischen den globalen Verschiebungen und der globalen Beanspruchung trainiert.
Im vorliegenden Fall können die lokalen Beanspruchungen und lokalen Verformungen des komplexen Materials in dem Versuchskörper 9 oftmals nicht unmittelbar gemessen werden. Hingegen können die globalen Beanspruchungen und globalen Verformungen des gesamten Versuchskörpers 9 auf herkömmlichen Prüfmaschinen einfach, schnell und mit einer hohen Genauigkeit bestimmt werden. Bei einem Zurückrechnen dieser globalen Beanspruchungen und globalen Verformungen des Versuchskörpers 9 auf die lokalen Beanspruchungen und lokalen Verformungen, welche unmittelbar auf das komplexe Material einwirken, wird zwangsläufig bereits eine Annahme über das Verhalten des komplexen Materials berücksichtigt. Auf diese Weise ermittelte Eingangsgrößen und Ausgangsgrößen zum Trainieren des beispielbasierten Modells 1 enthalten somit Annahmen über das Verhalten des komplexen Materials, welche die Beschreibung verfälschen können und zu ungenauen Ergebnissen einer numerischen Simulation führen können.
Im Gegensatz ist es bei gegenständlichem Verfahren nicht erforderlich, die lokalen Beanspruchungen und lokalen Verformungen, welche unmittelbar auf das komplexe Material einwirken, zu ermitteln. Vielmehr wird eine numerische Simulation des Versuchskörpers 9 unter Berücksichtigung des momentanen zu trainierenden beispielbasierenden Modells 1 durchgeführt, das Simulationsergebnis mit den gemessenen Werten des Versuchskörpers 9 verglichen und das beispielbasierte Modell 1 anhand dieses Vergleiches trainiert. Es findet daher kein isoliertes Training des beispielbasierten Modells 1 statt, sondern die numerische Simulation des gesamten Versuchskörpers 9 wird in das Training des beispielbasierten Modells 1 integriert. Es hat sich überraschenderweise gezeigt, dass die Verbesserung der Genauigkeit der Beschreibung des komplexen Materials den erhöhten Aufwand zur Bestimmung der Beschreibung weitaus überwiegt.
Bei dem Training ist zunächst nicht bekannt, wie sich Parameteränderungen in dem beispielbasierten Modell 1 auf die globalen Beanspruchungen und globalen Verschiebungen auswirken, wobei sich dieser Einfluss je nach Zustand des Versuchskörpers 9 ändern kann. Durch die Einbeziehung der numerischen Simulation des Versuchskörpers 9 in das Training des beispielbasierten Modells 1 beeinflussen insbesondere auch mögliche Stabilitätswechsel od. dgl. des Versuchskörpers 9 das Trainingsergebnis.
Bei dem Versagen des komplexen Materials kommt es oftmals zu plastischen und/oder rheologischen Effekten, wobei das Materialverhalten abhängig von den bisherigen Belastungszuständen ist. Daher hat es sich als günstig erwiesen, wenn eine zeitabhängige Beschreibung des komplexen Materials erstellt wird. Bei einer zeitabhängigen Beschreibung können die Messgrößen des Versuchskörpers 9 über die Zeit berücksichtigt werden und bei einem Messvorgang eine Vielzahl an Beispielen zum Trainieren des beispielbasierten Modells 1 ermittelt werden.
Der Versuchskörper 9 kann zum einfachen Befestigen in eine Prüfmaschine ausgebildet sein und auf die Erfordernisse zur einfachen Bestimmung seiner globalen Beanspruchungen und globalen Verformungen ausgebildet sein. Als günstig erscheint, wenn lediglich ein Bestimmungsbereich des Versuchskörpers 9 durch das komplexe Material ausgebildet wird und dieser Bestimmungsbereich lediglich in einem Teil des Versuchskörpers 9 ausgebildet wird. Auf diese Weise kann einfach sichergestellt werden, dass für das Verhalten des Versuchskörpers 9 mit Ausnahme des Bestimmungsbereiches eine hinreichend genaue Beschreibung des Materialverhaltens für die numerische Simulation vorhanden ist. Weiters kann der Versuchskörper 9 so aufgebaut sein, dass eine Belastung bis zur Versagensgrenze lediglich bei dem Bestimmungsbereich auftritt. Durch einen kleinen Bestimmungsbereich kann sichergestellt werden, dass sich das komplexe Material einheitlich verhält und eine mögliche Unbestimmtheit des Materialverhaltens möglichst gering ist. Weiters kann durch einen kleinen Bestimmungsbereich bei dem Training rasch eine gute Annäherung der Beschreibung des komplexen Materials durch das beispielbasierte Modell 1 erreicht werden. Eine derartige Unbestimmtheit kann sich ergeben, wenn mehrere mögliche innere Belastungszustände ermittelt werden können, welche in Abhängigkeit von dem beispielbasierten Modell 1 zu den gemessenen globalen Beanspruchungen und globalen Verformungen führen. Diese kann bei dem Verwenden eines kleinen Bestimmungsbereiches weitgehend vermieden werden.
Als besonders günstig erscheint es, wenn der Bestimmungsbereich in dem numerischen Modell 2 zum Trainieren des beispielbasierten Modells 1 durch ein einziges Element dargestellt wird. Wenn der Bestimmungsbereich durch lediglich ein Element dargestellt und der restliche Versuchskörper durch bekannte Elemente mit bekannten Materialbeschreibungen hinreichend genau nachgebildet wird, kann die erforderliche Zeit zum Trainieren gering gehalten werden, da wechselseitige Einflüsse mehrerer Elemente des Bestimmungsbereiches nicht auftreten können. Um den Bestimmungsbereich mit lediglich einem Element darstellen zu können, erscheint es günstig, den Bestimmungsbereich entsprechend klein auszubilden. Das komplexe Material kann eine Verbindungsstelle sein. Insbesondere kann die Verbindungsstelle eine Schweißstelle, eine Lötstelle oder eine Klebestelle sein. Bei dem in Fig. 2 gezeigten Versuchskörper 9 kann das komplexe Material die Verbindungsstelle der beiden Hälften des Versuchskörpers 9 sein. Weiters sind in Fig. 2 unterschiedliche Lastzustände dargestellt, welche dem Versuchskörper 9 unterzogen werden können. Dabei kann vorgesehen sein, dass unterschiedliche Lastzustände kombiniert und gegebenenfalls überlagert werden.
Bei anderen Ausführungsformen kann auch vorgesehen sein, dass zwei oder mehr Verbindungsstellen oder eine größere Verbindungsstelle an dem Versuchskörper 9 als komplexes Material ausgebildet sind, beispielsweise mehrere Schweißstellen oder eine Schweißnaht.
In Fig. 1 ist das beispielsbasierte Modell 1 dargestellt, welches einer oder mehrerer Eingangsgrößen eine oder mehrerer Ausgangsgrößen zuordnet, die in Fig. 1 mit Input und Output bezeichnet sind. Das beispielbasierte Modell 1 ist in einer vollständigen FE-Simulation 2 implementiert, mit der zu globalen Verschiebungen die zugehörenden globalen Beanspruchungen ermittelt werden. Diese globalen Beanspruchungen werden anschließend mit den gemessenen Werten verglichen und aufgrund des Vergleichsergebnisses die Parameter des beispielbasierten Modells 1 angepasst.
Das Verfahren kann insbesondere mittels eines Programms durchgeführt werden, welches auf einem Datenträger gespeichert ist. Der Datenträger kann beispielsweise eine Festplatte, einen Arbeitsspeicher, eine oder mehrere Wechseldatenträger, wie CDs, DVDs oder USB-Sticks umfassen.
Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann, und sind ausschließlich durch den in den Ansprüchen definierten Schutzumfang beschränkt.

## Patentansprüche

1. Computerimplementiertes Verfahren zur numerischen Simulation eines mechanischen Körpers, wobei durch die Simulation das Verhalten eines Kraftfahrzeuges bei einem Aufprall bestimmt wird, wobei eine Beschreibung eines Verhaltens von Verbindungsstellen des mechanischen Körpers erstellt wird, wobei ein beispielbasiertes Modell (1) für die Beschreibung des Verhaltens der Verbindungsstellen verwendet wird, wobei das beispielbasierte Modell (1) anhand von Beispielen trainierbar ist, um einer oder mehrerer Eingangsgrößen eine oder mehrere Ausgangsgrößen zuzuordnen, und ohne analytischen Ansatz für den Zusammenhang der Eingangsgrößen und Ausgangsgrößen auskommt, wobei zumindest eine Verbindungsstelle in einem Versuchskörper (9) integriert wird, wobei ein Bestimmungsbereich des Versuchskörpers (9) durch die zumindest eine Verbindungsstelle ausgebildet wird, dass der Bestimmungsbereich lediglich in einem Teil des Versuchskörpers ausgebildet wird, dass an dem Versuchskörper (9) Vorgabewerte für die globale Beanspruchung und die globale Verschiebung des Versuchskörpers (9) ermittelt werden, dass ein numerisches Modell (2) des Versuchskörpers (9) unter Einbeziehung des beispielbasierten Modells (1) für die zumindest eine Verbindungsstelle erstellt wird, und dass das beispielbasierte Modell (1) anhand der Vorgabewerte und der Ergebnisse von numerischen Simulationen des Versuchskörpers mit dem numerischen Modell (2) zur Ermittlung des Zusammenhangs zwischen den globalen Verschiebungen und der globalen Beanspruchung trainiert wird.

2. Computerimplementiertes Verfahren nach Anspruch 1, **dadurch gekennzeichnet, dass** eine zeitabhängige Beschreibung des Verhaltens der Verbindungsstelle erstellt wird.

3. Computerimplementiertes Verfahren nach Anspruch 1 oder 2, **dadurch gekennzeichnet, dass** der Bestimmungsbereich in dem numerischen Modell (2) zum Trainieren des beispielbasierten Modells (1) durch ein einziges Element dargestellt wird.

4. Computerimplementiertes Verfahren nach einem der Ansprüche 1 bis 3, **dadurch gekennzeichnet, dass** die Verbindungsstelle eine Schweißstelle, eine Lötstelle oder eine Klebestelle ist.

5. Datenträger, **dadurch gekennzeichnet, dass** auf ihm ein Programm zur Ausführung des in den Ansprüchen 1 bis 4 beanspruchten computerimplementierten Verfahrens gespeichert ist.

## Claims

1. A computer-implemented method for numerical simulation of a mechanical body, wherein the behavior of a motor vehicle in an impact is determined by the simulation, wherein a description of a behavior of connection points of the mechanical body is made, wherein an example-based model (1) for describing the behavior of the connection points is used, wherein the example-based model (1) is trainable on the basis of examples in order to assign one or more output variables to one or more input variables, and manages without analytical approach for the relationship of the input variables and output variables, wherein at least one connection point is integrated in a test body (9), wherein a determination region of the test body (9) is formed by the at least one connection point, that the determination region is formed only in a part of the test body, that default values for global loading and global shifting of the test body (9) are determined on the test body (9), that a numerical model (2) of the test body (9) is constructed using the example-based model (1) for the at least one connection point, and that the example-based model (1) is trained on the basis of the default values and the results of numerical simulations of the test body with the numerical model (2) to determine the relationship between the global shifts and the global loading.

2. A computer-implemented method according to claim 1, **characterized in that** a time-dependent description of the behavior of the connection point is created.

3. A computer-implemented method according to claim 1 or 2, **characterized in that** the determination region in the numerical model (2) for training the example-based model (1) is represented by a single element.

4. A computer-implemented method according to one of the claims 1 to 3, **characterized in that** the connection point is a welding point, a solder joint or an adhesive joint.

5. A data carrier, **characterized in that** a program is stored thereon for carrying out the computer-implemented method as claimed in the claims 1 to 4.

## Revendications

1. Procédé exécuté sur ordinateur pour la simulation numérique d'un corps mécanique, dans lequel la simulation détermine le comportement d'un véhicule à moteur lors d'une collision, dans lequel une description d'un comportement des points d'assemblage du corps mécanique est créée, dans lequel un modèle basé sur des exemples (1) est utilisé pour décrire le comportement des points d'assemblage, dans lequel le modèle basé sur des exemples (1) peut être entraîné à l'aide d'exemples pour attribuer une ou plusieurs grandeurs de sortie à une ou plusieurs grandeurs d'entrée et fonctionne sans approche analytique pour la mise en relation des grandeurs d'entrée et des grandeurs de sortie, dans lequel au moins un point d'assemblage est intégré dans un corps d'essai (9), dans lequel une zone de détermination du corps d'essai (9) est formée par l'au moins un point d'assemblage, la zone de détermination étant formée seulement dans une partie du corps d'essai, des valeurs de consigne étant déterminée sur le corps d'essai (9) pour la contrainte globale et la translation globale du corps d'essai (9), un modèle numérique (2) du corps d'essai (9) étant créé en intégrant le modèle basé sur des exemples (1) pour l'au moins un point d'assemblage et le modèle basé sur des exemples (1) étant entraîné à l'aide des valeurs de consigne et des résultats de simulations numériques du corps d'essai avec le modèle numérique (2) afin de déterminer la relation entre les translations globales et la contrainte globale.

2. Procédé exécuté sur ordinateur selon la revendication 1, **caractérisé en ce qu'**une description en fonction du temps du comportement du point d'assemblage est créée.

3. Procédé exécuté sur ordinateur selon la revendication 1 ou 2, **caractérisé en ce que** la plage de détermination est représentée dans le modèle numérique (2) pour l'entraînement du modèle basé sur des exemples (1) par un élément unique.

4. Procédé exécuté sur ordinateur selon l'une des revendications 1 à 3, **caractérisé en ce que** le point d'assemblage est un point de soudage, un point de brasage ou un point de collage.

5. Support de données **caractérisé en ce qu'**un programme pour l'exécution d'un procédé exécuté sur ordinateur selon la revendication selon les revendications 1 à 4 est stocké dessus.
